Europäisches Patentamt

(19) European Patent Office

Office européen des brevets

(11) Numéro de publication: **0 239 486**
**B1**

# (12) FASCICULE DE BREVET EUROPEEN

(45) Date de publication du fascicule du brevet:
**16.08.89**

(21) Numéro de dépôt: **87400641.4**

(22) Date de dépôt: **23.03.87**

(51) Int. Cl.⁴: **B65H 51/20**, B21C 49/00

(54) **Système d'accumulation d'un élément filiforme, tel que fibre optique, à vitesses de défilement différentes.**

(30) Priorité: **28.03.86 FR 8604565**

(43) Date de publication de la demande:
**30.09.87 Bulletin 87/40**

(45) Mention de la délivrance du brevet:
**16.08.89 Bulletin 89/33**

(84) Etats contractants désignés:
**BE CH DE GB IT LI NL SE**

(56) Documents cités:
**CH-A- 579 499**
**DE-B- 1 139 085**
**DE-B- 2 540 746**
**FR-A- 1 395 162**
**SU-A- 200 713**

(73) Titulaire: **SAT Société Anonyme de
Télécommunications, 40, avenue de New York,
F-75116 Paris(FR)**
Titulaire: **SOCIETE INDUSTRIELLE DE LIAISONS
ELECTRIQUES - SILEC, 64bis, rue de Monceau,
F-75008 Paris(FR)**

(72) Inventeur: **Missout, Bernard Michel, 41, rue Cantagrel,
F-75631 Paris Cedex 13(FR)**
Inventeur: **Michaux, Jean-Pierre, 41, rue Cantagrel,
F-75631 Paris Cedex 13(FR)**
Inventeur: **Striebig, Jean-Louis Marie, 41, rue Cantagrel,
F-75631 Paris Cedex 13(FR)**

(74) Mandataire: **Martinet & Lapoux, 62, rue des Mathurins,
F-75008 Paris(FR)**

## Description

La présente invention concerne, d'une manière générale, un système pour accumuler un élément filiforme défilant avec des première et seconde vitesses différentes en entrée et sortie du système.

De préférence, l'élément filiforme peut être une fibre optique qui sort d'une machine de multifibrage avec la première vitesse, et qui entre dans une machine de câblage avec la seconde vitesse. En fonctionnement normal, les première et seconde vitesses sont égales.

Cependant, en pratique, il s'avère que les deux vitesses, bien que parfois asservies l'une à l'autre, sont parfois inégales ce qui traduit un ralentissement du défilement dans la machine de multifibrage ou dans la machine de câblage, ou un arrêt momentané de l'une des machines pour opérer une réparation, un changement de pièce, ou analogue. Dans tous ces cas, le ralentissement ou l'arrêt dans l'une des machines est également imposé dans l'autre machine.

Pour pallier cette interdépendance de fonctionnement entre la machine de multifibrage et la machine de câblage, il s'avère nécessaire de loger un système d'accumulation de fibre optique entre les deux machines pour absorber des différences entre les première et seconde vitesses, sans détériorer la fibre optique. Ainsi, en cas de ralentissement ou d'arrêt de la machine de multifibrage en amont du système, la quantité de fibre optique accumulée diminuera, et en cas de ralentissement ou d'arrêt de la machine de câblage en aval du système, la quantité de fibre optique accumulée augmentera. En pratique, l'aptitude du système à absorber des différences et discontinuités des vitesses de défilement dépendra de la capacité de stockage du système, et ainsi principalement de ses dimensions.

La présente invention fait appel à un système d'accumulation tel que défini dans le préambule de la revendication 1. Un tel système d'accumulation est divulgué par la demande de brevet allemand DE-B-1 139 085 selon laquelle l'élément filiforme est un fil de fer et le système est inséré dans un train de laminoir. En amont du système, le fil d'acier traverse un tube vertical puis un bras incliné par rapport au tube et lié au tube, ou un entonnoir tronconique coaxial au tube et lié au tube. Le tube et le bras ou l'entonnoir sont entraînés à rotation au-dessus d'un réservoir sous la forme d'un tambour cylindrique fixe d'accumulation et coaxialement à celui-ci au moyen d'un train d'engrenage couplé à un moteur. La rotation du bras ou de l'entonnoir permet ainsi de déposer le fil d'acier en des spires circulaires superposées et maintenues concentriques contre la paroi cylindrique du tambour. Le fil est tiré à une seconde vitesse de défilement faible à travers un orifice central au fond du tambour.

Cependant un tel dispositif ne peut être envisagé pour accumuler une fibre optique en raison du fait que la fibre optique est très fine, d'un diamètre de quelques dizièmes de millimètre, et n'est pas capable d'être empilée en des spires circulaires superposées. En effet, en pratique, les spires de fibre optique s'affaissent vers le centre des spires ce qui crée un emmêlement des spires et un risque de fragilisation, voire de cassure de la fibre optique par tirage en sortie du tambour. En outre, comme on le verra dans la suite, certaines précautions particulières sont à prendre en considération lors d'une accumulation d'une fibre optique, notamment en ce qui concerne des courbures imposées à la fibre qui doivent avoir un rayon excédant un rayon minimal en deça duquel les caractéristiques physiques et mécaniques de la fibre optique sont alors modifiées.

La présente invention a donc pour but de fournir un système d'accumulation d'élément filiforme, de préférence très fin, permettant un déroulement sans embrouille et détérioration de l'élément filiforme à travers le fond du réservoir, tout en recherchant une occupation optimale du fond du réservoir par l'élément filiforme accumulé.

A cette fin, un système pour accumuler un élément filiforme selon l'invention est tel que défini dans la revendication 1.

Selon un autre aspect de l'invention, les spires accumulées selon ladite trajectoire sur le fond doivent être maintenues aussi bien à leur périphérie externe par la paroi du réservoir qu'à leur périphérie interne afin de permettre un déroulement des spires inférieures par glissement doux sur le fond du réservoir, tout en évitant un quelconque emmêlement des spires entre elles provoquant une rupture de l'élément filiforme, tel que fibre optique. A cette fin, les moyens pour guider sont disposés au centre du réservoir et sont internes aux spires de ladite trajectoire d'enroulement de l'élément filiforme. De préférence, les moyens pour guider sont constitués par deux couronnes concentriques telles que définies à la revendication 10.

D'autres caractéristiques et avantages de l'invention apparaîtront plus clairement à la lecture de la description suivante de plusieurs réalisations préférées en référence aux dessins annexés correspondants dans lesquels :

- la Fig.1 est une vue schématique de côté, partiellement en coupe axiale, d'une partie supérieure d'un système d'accumulation selon l'invention, ladite partie supérieure comprenant un dispositif d'entraînement et un dispositif d'enroulement ;
- la Fig.2 est une vue schématique en coupe axiale d'une partie inférieure du système d'accumulation, comprenant un réservoir d'accumulation en amont d'un dispositif de déroulement.
- la Fig.3 montre une trajectoire épicycloïdale d'enroulement d'élément filiforme dans un réservoir d'accumulation ; et
- la Fig.4 est un schéma cinématique pour expliquer l'obtention de la trajectoire dans la Fig.3.

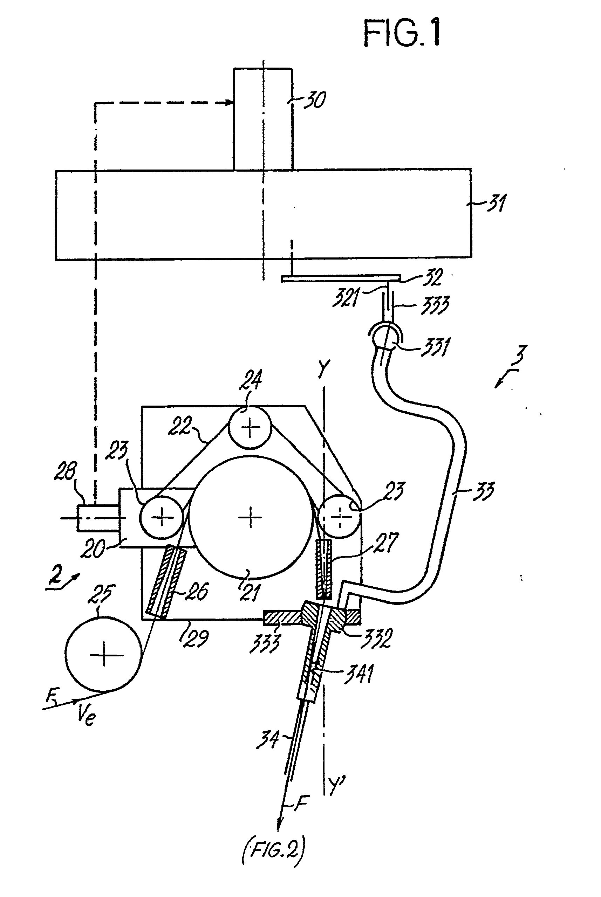

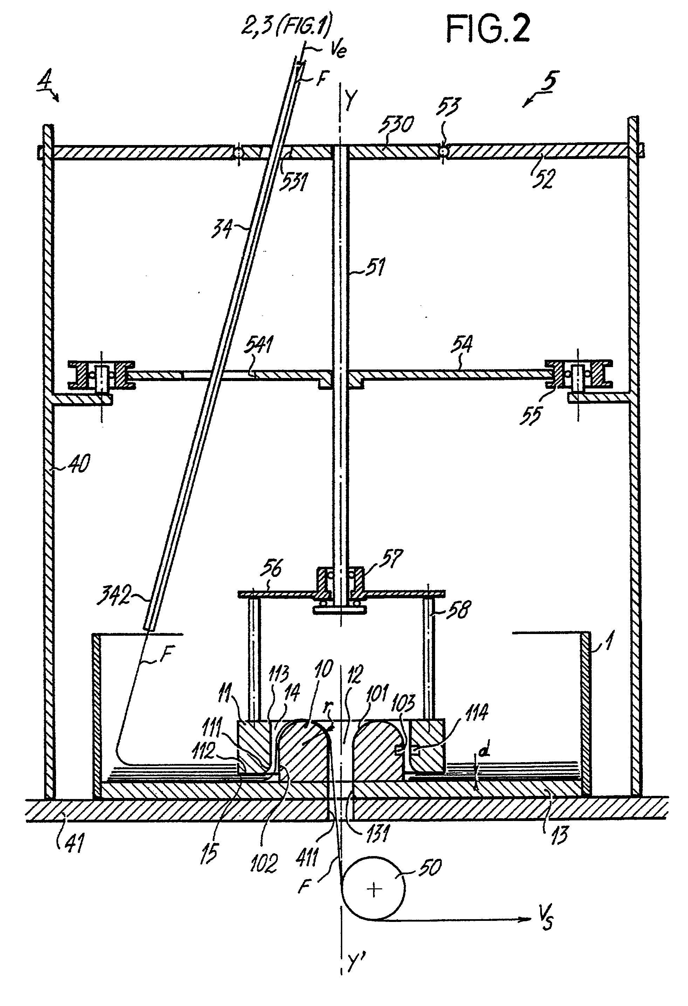

Comme montré schématiquement aux Figs.1 et 2, un système d'accumulation d'un élément filiforme, tel qu'une fibre optique F à laquelle on se référera dans la suite, comprend un réservoir d'accumulation sous la forme d'un fût cylindrique 1 ou d'un plateau à axe vertical YY'. Au-dessus du réservoir sont prévus un dispositif d'entraînement 2 tirant la fibre F à une vitesse d'entrée $V_e$, et un dispositif d'enroulement 3 pour lover la fibre dans le réservoir 1 suivant une trajectoire prédéterminée du type épicycloïdal ou hypocycloïdal, ou d'un autre type convenable permettant le déroulement correct de la fibre vers l'extérieur du fût. Le dispositif 3 est situé de part et d'autre d'un axe vertical YY' passant par le centre d'articulation d'une rotule 332 définie dans la suite, et le dispositif 2 est situé par côté, ici à gauche, de l'axe YY' et du dispositif 3. Les dispositifis 2 et 3 sont fixés à trois colonnes 40 d'un bâti 4 érigées à partir d'une semelle 41 supportant le réservoir 1. Le système comprend en partie inférieure, un galet de renvoi 50 en amont d'un dispositif de déroulement permettant de dérouler la fibre F à une vitesse de sortie $V_s$, la fibre F passant à travers un conduit axial 12 pratiqué dans un noyau à couronnes 10-11 central et intérieur au fût 1.

Le dispositif d'entraînement 2 sert à entraîner la fibre à la vitesse d'entrée $V_e$ qui est imposée soit directement par le dispositif d'entraînement 2, soit par des moyens de tirage situés en amont du système d'accumulation et couplés au dispositif d'entraînement. Ces moyens en amont sont typiquement une machine de multifibrage étirant simultanément plusieurs fibres optiques, afin de produire des fibres optiques à partir de préformes en silice par exemple traversant un four et un dispositif de revêtements de fibre et de séchage des revêtements.

Comme montré à la Fig.1, le dispositif 2 comprend un moteur 20 entraînant une poulie 21 autour d'un arbre horizontal. La poulie a une jante comportant une gorge en U sur laquelle est tendue une courroie ou sangle plate sans fin 22. La tension de la courroie est réalisée au moyen de deux galets fous 23 alignés suivant un diamètre horizontal de la poulie 22 et d'un troisième galet fou 24 aligné verticalement avec la poulie et au-dessus de celle-ci de sorte que la courroie est plaquée sensiblement sur la demi-circonférence supérieure de la gorge de la poulie et est menée par la poulie. La fibre F sortant des moyens de tirage en amont passe sous un galet de renvoi 25 en entrée du système et traverse rectilignement un guide tubulaire d'entrée 26 incliné sensiblement à 15° par rapport à la verticale afin que la fibre F chemine vers le haut et arrive tangentiellement sur la poulie 21, entre la jante de celle-ci et le galet de gauche 23, et soit prise en sandwich entre la courroie 22 et la gorge périphérique de la poulie 21. Puis, après avoir contourné par le haut la poulie 21, la fibre F émerge sensiblement verticalement, de préférence suivant la tangente à la poulie 21 au point de sortie de la fibre, entre la poulie 21 et le galet de droite 23 pour descendre verticalement le long de l'axe YY' à travers un guide tubulaire de sortie 27 à entrée évasée situé dessous le plan horizontal contenant les axes des galets 23 et de la poulie 21.

Le dispositif d'entraînement 2 comporte également un mesureur de vitesse 28 lié à l'arbre du moteur 20 pour asservir la vitesse de rotation d'un moteur 30 inclus dans le dispositif d'enroulement 3, et ainsi la vitesse d'enroulement de la fibre F autour du noyau central 10-11 du fût 1. Tout moyen convenable, autre que le dispositif 3 décrit ci-après, pour obtenir une vitesse de dépose correcte de la fibre dans le fût suivant la trajectoire désirée peut être utilisé.

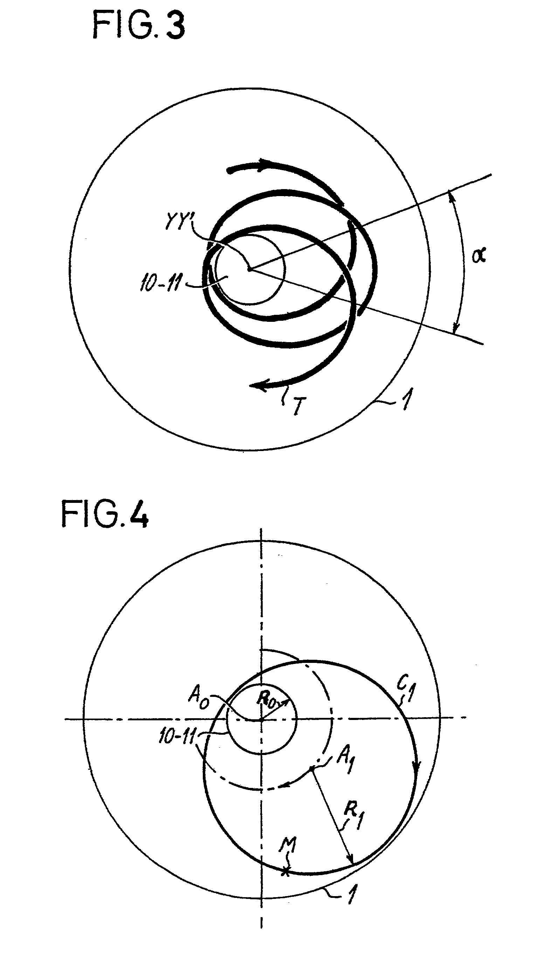

Le dispositif d'enroulement 3 enroule la fibre F dans le fût d'accumulation 1 suivant une trajectoire cycloïdale T du type épicycloïdale ou hypocycloïdale, comme montré à la Fig.3. Une telle trajectoire T résulte de la combinaison d'une rotation d'un point M sur un cercle horizontal $C_1$ de rayon $R_1$ autour d'un axe vertical $A_1$ passant par le centre du cercle, et de la rotation de l'axe $A_1$ autour de l'axe vertical YY' désigné par $A_0$ dans la Fig. 4. Selon la disposition montrée à la Fig.4, l'axe YY' traverse l'intérieur du cercle $C_1$ de sorte que la distance interaxiale (YY', $A_1$) est inférieure au rayon $R_1$. En pratique, (YY', $A_1$) + $R_1$ est inférieur au rayon interne du fût 1, et $R_1$ - (YY', $A_1$) est égale ou sensiblement supérieure au rayon externe du noyau 10-11 afin que les spires de la trajectoire T soient sensiblement tangentielles au noyau, ou à un cercle concentrique au noyau, et entourent celui-ci par rotation autour de l'axe YY'. Chaque spire passe au-dessus des spires précédemment formées de sorte que la fibre F forme des couches de spires autour de l'axe YY'. En pratique, la vitesse de rotation du point M autour de l'axe $A_1$ et la vitesse de rotation de l'axe $A_1$ autour de l'axe YY' sont choisies afin que la distance entre deux spires consécutives de la trajectoire, qui sont figurées à la périphérie du noyau selon l'exemple illustré à la Fig.3, soit très inférieure à $2\pi R_1$, et qu'un nombre élevé de spires soit formé pendant un tour de l'axe $A_1$ autour de l'axe YY'.

Par exemple, les paramètres suivants sont choisis :
- diamètre du fût : 0,55 m > 2((YY', $A_1$) + $R_1$)
- hauteur du fût : 50 mm
- diamètre moyen des spires $2R_1$ = 0,40 m
- diamètre externe du noyau 10-11 : 0,32 m $\cong$ 2($R_1$ - (YY', $A_1$))
- diamètre de la fibre F : 0,25 mm
- décalage angulaire des spires : $\alpha$ = 20° à 25°

Avec les paramètres indiqués ci-dessus, les vitesses d'entrée et de sortie $V_e$ et $V_s$ de la fibre dans le système d'accumulation, de l'ordre de quelques centaines de mètre par minute, ont été obtenues. La fibre a pu être stockée sur une longueur de 3 500 m minimum, correspondant à une hauteur d'empilage de 18 mm environ.

Comme montré à la Fig. 1, un dispositif d'enroulement de fibre 3 comprend en partie haute, un train d'engrenage épicycloïdal ou hypocycloïdal 31 dont le carter est fixé à des extrémités supérieures des colonnes de bâti 40 et soutient le moteur 30 entraînant le train 31. Un satellite sous-jacent au train 31 et équivalent au cercle $C_1$ comporte à la périphérie une manivelle verticale 32 dont le mouvement cycloïdal est ramené sur l'axe YY' et en dessous du guide 27 par un bras en forme de U 33. Une extrémité supérieure du bras 33 est liée à une extrémité inférieure 321 de la manivelle 32 par une articulation à caradan 331. Une portion supérieure tubulaire 333 de l'articulation à cardan 331 est guidée à coulissement verticale par l'extrémité inférieure 321 de la manivelle. Une extrémité inférieure du bras 33 forme une rotule demi-sphérique 332. La rotule est logée dans un palier à rotule 333 fixée à une console 29 supportant la poulie 21, les galets 23 et 24 et les guides 26 et 27, la console étant fixée aux colonnes de bâti. La rotule 332 a une centre d'articulation situé sur l'axe YY' et en dessous du guide 27. Le bras 33 a une forme en U afin de contourner le dispositif d'entraînement 2 lorsque la manivelle 32 passe au-dessus de celui-ci, à gauche de l'axe YY'.

Le dispositif d'enroulement 3 comporte également un long tube fin 34, ayant en pratique une longueur de 1,30 m environ, afin que la fibre sortant du guide 27 descende et glisse dans le tube par poussée exercée par la poulie 21 et/ou par gravité dans le fût quelle que soit la position d'une extrémité inférieure 342 du tube 34 par rapport au noyau 10-11 et à la paroi périphérique du fût 1. Une extrémité supérieure 341 du tube 34 largement évasée sous le guide 27 est emmanchée diamétralement dans la rotule 332 et enserrée classiquement dans la rotule 332. L'extrémité inférieure 342 avoisine la base supérieure ouverte du fût 1 et décrit des trajectoires comme celle montrée schématiquement à la Fig.3. Une distance minimale est prévue libre entre la surface supérieure de l'empilage et l'extrémité 342 du tube, cette distance dépendant de la forme de l'extrémité 342 qui peut être évasée et/ou précourbée. La vitesse du moteur 30 est asservie à celle du moteur 20 grâce au mesureur de vitesse 28 afin que la fibre F soit déposée dans le fût 1 conformément à la trajectoire choisie T.

Comme montré en détail à la Fig.2, le fût 1 est fixé sur la semelle horizontale 41 du bâti et est centré sur l'axe YY', sous le tube 34. La surface de dessus du fond 13 interne au fût offre un coefficient de frottement compatible avec un déroulement correct de la fibre, par exemple obtenu avec des sillons circulaires ayant une profondeur d'un dizième du diamètre de la fibre environ. Selon d'autres variantes, le coefficient de frottement est obtenu au moyen d'un lit fluidisé ou d'un liquide, par exemple tel que du mercure, déposé sur le fond 13 et ayant une densité convenable.

L'opération de déroulement de la fibre F lovée autour du noyau 10-11 du fût consiste à exercer un effort de traction suivant une direction située dans le plan de la spire inférieure de l'empilage de spires et à guider et extraire la fibre à travers le centre du fond de fût 13 et de la semelle de bâti 41 et par dessous le fond et la semelle.

Le noyau du fût est composé d'une couronne cylindrique interne 10 et d'une couronne cylindrique externe 11 concentriques à l'axe YY' pour guider entre elles la fibre F à partir du fond du fût supportant les spires accumulées, vers l'extérieur du fût.

La couronne interne 10 est fixée contre la surface de dessus du fond 13 et offre, en partie supérieure, une section axiale convexe semi-circulaire (101 de rayon r sensiblement égal à la moitié de la hauteur de la couronne 10. Le conduit central 12 est pratiqué dans la couronne 10, et présente une extrémité supérieure évasée vers le haut formé par la section semi-circulaire, et une extrémité inférieure débouchant sous le bâti à travers des orifices axiaux 131 et 411 pratiqués dans le fond 13 et la semelle 41.

La couronne externe 11 contre laquelle s'appuie partiellement l'intérieur des spires de fibre optique, est immobile et est suspendue au-dessus du fond 13 à une distance prédéterminée d excédant de quelques millimètres le diamètre de la fibre F afin de permettre le déroulement de la spire inférieure en appui sur le fond 13. La couronne 11 offre un bord inférieur interne 111 ayant une section axiale convexe en quart de cercle, de rayon sensiblement égal à r, reliant tangentiellement un bord inférieur plat externe 112 parallèle au fond 13 et un bord supérieur cylindrique 113 entourant concentriquement une portion supérieure de la surface cylindrique externe 102 de la couronne interne 10. Un interstice annulaire 14 est ainsi formé entre les surfaces 113 et 102 et a une largeur radiale sensiblement égale à d. Les surfaces circulaires 111 et 101 ont un rayon de courbure r, comme celui de la poulie 21, nettement plus grand que le rayon de courbure minimal, de l'ordre de 5 cm, que peut subir une fibre optique sans influencer ses caractéristiques physiques. Typiquement, r est compris entre 200 et 400 diamètres de fibre, par exemple r = 9,5 cm. Il est à noter que tous les rayons de courbure de la fibre suivant sa trajectoire dans le système d'accumulation sont également plus grands que le rayon de courbure minimal de la fibre optique.

La fibre F est ainsi déroulée à partir de l'extrémité en aval de la spire inférieure de l'empilement de spires, en traversant un premier interstice 15 entre la surface inférieure horizontale 112 de la couronne externe 11 et la surface de dessus du fond 13, en longeant le bord en quart de cercle 111, en traversant l'interstice 14 entre les couronnes, en longeant l'extrémité supérieure semi-circulaire 101, en traversant verticalement le conduit central 12 et les orifices 131 et 411 et en sortant par le dessous de la semelle 41. Puis la fibre F contourne par le bas le galet de renvoi 50 afin de pénétrer dans une chaîne de câblage en aval du système d'accumulation, tirant et déroulant la fibre dans le fût à une vitesse de sortie $V_s$ qui peut être différente de la vitesse d'entrée $V_e$. La chaîne de câblage comporte des moyens d'entraînement pour tirer à la même vitesse $V_s$ plusieurs fibres émanant de plusieurs systèmes d'accumulation selon l'invention, en vue d'introduire les fibres par exemple dans des rainures d'une âme plate ou cylindrique rainurée ou à l'intérieur d'un tube pour former notamment un câble à fibres optiques.

Comme montré également à la Fig.2, le système d'accumulation comporte, sous le palier à rotule 333 et au-dessus du fût 1, un ensemble de plateaux 5 pour guider le tube 34 et pour suspendre la couronne externe 11 et l'immobiliser rotationnellement et axialement, malgré le mouvement du tube de guidage de fibre 34 au-dessus du fût 1 et autour de l'axe vertical YY'.

L'immobilisation en rotation de la couronne 11 est obtenue au moyen d'une attraction magnétique exercée par des aimants permanents 114 et 103 ayant des pôles opposés en regard et noyés respectivement dans la couronne externe 11 et la couronne interne 10 de part et d'autre de l'interstice annulaire 14, comme illustré à la Fig.2, et/ou dans la couronne externe 11 et le fond de fût 13 de part et d'autre de l'interstice annulaire 15.

Entre le palier à rotule 333 et le noyau 10-11 est prévu un arbre vertical tournant 51. L'arbre 51 est maintenu coaxial à l'axe YY' au moyen d'un plateau circulaire horizontal supérieur 52 ayant une périphérie fixée aux colonnes de bâti 40 et d'un boîtard à roulement à billes 53 central au plateau 52, et au moyen d'un plateau circulaire horizontal intermédiaire 54 situé sensiblement à mi-hauteur entre le plateau 52 et le noyau 10-11 et maintenu coaxialement à l'axe YY' au moyen de roues périphériques folles à gorge 55 reliées par consoles aux colonnes de bâti 40. L'arbre 51 est fixé, en partie supérieure, à une bague intérieure 530 du roulement à billes dans le boîtard 53, et en partie médiane, au plateau intermédiaire 54 de sorte que l'arbre 51 tourne librement autour de son axe YY'. En partie inférieure, au-dessus du noyau du fût, un petit plateau horizontal inférieur 56 est accouplé à l'arbre 51 par l'intermédiaire d'une crapaudine suspendue 57 dotée de deux roulements à billes. Des broches verticales 58 fixées au plateau 56 suspendent la couronne externe 11 au-dessus du fond 13, séparée de celui-ci de la distance d. Afin d'introduire la fibre F sous la couronne 11, dans l'interstice 15, et entre les couronnes 11 et 10, dans l'interstice 14, avant la mise en fonctionnement du système d'accumulation, la crapaudine 57 peut coulisser axialement le long de l'arbre 51 ce qui permet de soulever la couronne 11 au-dessus du fond 13 pour faciliter l'introduction de l'extrémité de la fibre.

Afin de ne point entraver le déplacement épicycloïdal ou hypocycloïdal du long tube guide-fibre 34 autour de l'axe YY', le tube 34 traverse à glissement doux une petite boutonnière radiale 531 pratiquée dans la bague intérieure 530 du roulement à billes dans le boîtard 53, et une boutonnière radiale plus longue 541 pratiquée dans le plateau intermédiaire 54. En fonctionnement, le tube 34 glisse dans les boutonnières 531 et 541 et entraîne en rotation la bague 530, le plateau 54 et l'arbre 51, sans entraîner en rotation la couronne 11 et le plateau inférieur 56 qui sont découplés de l'arbre 51 par la crapaudine 57, la couronne 11 demeurant immobile grâce au couplage magnétique entre les aimants 103 et 114.

Bien que l'invention ait été décrite selon une réalisation préférée, d'autres réalisations entrant dans le cadre de l'objet défini ci-après sont concevables par l'homme du métier. Le dispositif d'entraînement 2 peut comprendre une ou plusieurs chenilles à la place de la courroie 22 et/ou de la poulie 21, ou en combinaison avec celles-ci. Les moyens d'entraînement épicycloïdal ou hypocycloïdal 30-31 peuvent entre conçus en mettant en oeuvre des actionneurs électriques, hydrauliques ou pneumatiques. La couronne 11 peut être maintenue au-dessus du fond de fût 13 par des moyens de lévitation magnétique ou pneumatique.

En outre, bien que le système selon l'invention soit prévu particulièrement pour une accumulation d'un élément filiforme très fin et fragile, ce système peut être utilisé chaque fois qu'il est nécessaire de former une accumulation d'un élément filiforme souple dans une chaîne de fabrication comprenant une partie en amont dans laquelle l'élément filiforme défile à une vitesse succeptible d'être différente de la vitesse de défilement de l'élément dans une partie en aval de la chaîne. Par exemple, l'élément filiforme peut être un fil ou un tube métallique ou plastique, un fil ou une fibre textile, synthétique ou organique, ou un toron de fils ou fibres, ou plus généralement tout élément filiforme ou tubulaire.

## Revendications

1 - Système pour accumuler un élément filiforme (F), ledit élément filiforme entrant à une première vitesse de défilement ($V_e$) dans le système et sortant à une seconde vitesse de défilement ($V_s$) du système, ledit système compenant un réservoir (1), des moyens (2, 3) au-dessus du réservoir pour enrouler l'élément filiforme (F) défilant à ladite première vitesse en des couches de spires superposées sur le dessus du fond (13) du réservoir, et des moyens (10, 11) pour guider l'élément filiforme (F) déroulé à ladite seconde vitesse ($V_s$) à partir du fond (13) du réservoir (1) à travers le fond et vers le dessous du fond, caractérisé en ce que les moyens pour enrouler (2, 3) enroulent l'élément filiforme (F) suivant une trajectoire du type épicycloïdal ou hypocycloïdal (T).

2 - Système conforme à la revendication 1, caractérisé en ce que les moyens pour enrouler comprennent des moyens (3), de préférence électromécaniques, pour déplacer suivant ladite trajectoire (T) une première extrémité (342) d'un tube (34) au-dessus du réservoir (1), l'élément filiforme (F) glissant dans le tube (34).

3 - Système conforme à la revendication 2, caractérisé en ce que l'élément filaire (F) pénètre dans une seconde extrémité (341) du tube (34) logée dans une rotule (332) entraînée par les moyens de déplacement (3), la rotule étant centrée sur un axe (YY') perpendiculaire au fond (13) du réservoir (1).

4 - Système conforme à l'une quelconque des revendications 1 à 3, caractérisé en ce que les moyens pour enrouler (2, 3) comprennent des moyens (20 à 26) pour tirer l'élément filiforme (F) à la première vitesse ($V_e$) et des moyens (27) pour guider l'élément filiforme (F) vers une perpendiculaire au centre (131) du fond (13) du réservoir (1) avant de déplacer l'élément filiforme (F) selon ladite trajectoire (T).

5 - Système conforme à la revendication 4, caractérisé en ce que les moyens pour tirer (20 à 26) comprennent une poulie (21) et une courroie tendue (22) pour prendre en sandwich l'élément filiforme (F) sur une portion périphérique de la poulie, de préférence à gorge.

6 - Système conforme à la revendication 2 ou 3 et à la revendication 4 ou 5, caractérisé en ce qu'il comprend des moyens (28) pour asservir les moyens pour déplacer (3) en fonction de la première

vitesse ($V_e$) déterminée par les moyens pour tirer (20 à 26) afin que l'élément filiforme (F) soit déposé dans le réservoir (1) suivant ladite trajectoire (T).

7 - Système conforme à l'une quelconque des revendications 1 à 6, caractérisé en ce que le dessus du fond (13) du réservoir (1) offre des sillons, de préférence ayant une profondeur de l'ordre du dizième du diamètre de l'élément filiforme (F).

8 - Système conforme à l'une quelconque des revendications 1 à 7, caractérisé en ce que le réservoir (1) contient un lit fluidisé ou un liquide.

9 - Système conforme à l'une quelconque des revendications 1 à 8, caractérisé en ce que les moyens pour guider (10, 11) sont disposés au centre (Y Y') du réservoir (1) et sont internes aux spires de ladite trajectoire (T) d'enroulement de l'élément filiforme (F).

10 - Système conforme à l'une quelconque des revendications 1 à 9, caractérisé en ce que les moyens pour guider (10, 11) comprennent une première couronne (10) fixée sur le fond de réservoir (13), et une seconde couronne (11) au-dessus du fond de réservoir (13) et entourant concentriquement la première couronne (10), l'élément filiforme (F) étant déroulé en passant à travers un premier interstice (15) entre la seconde couronne (11) et le fond (13), à travers un second interstice (14) entre les couronnes (10, 11) et à travers un conduit (12, 131) traversant la première couronne (10) et le fond (13), le conduit étant de préférence perpendiculaire au fond et axial à la première couronne.

11 - Système conforme à la revendication 10, caractérisé en ce que les premier et second interstices (15, 14) ont une largeur (d) excédant de quelques millimètres le diamètre de l'élément filiforme (F).

12 - Système conforme à la revendication 10 ou 11, caractérisé en ce que la première couronne (10) a une section axiale convexe semi-circulaire (101) à l'opposé du fond (13), et la seconde couronne a un bord (111) ayant une section axiale convexe en quart de cercle en regard du fond (13) et de la première couronne (10).

13 - Système conforme à la revendication 12, caractérisé en ce que l'élément filiforme (F) est une fibre optique, et les sections convexes (101, 111) ont des rayons (r) supérieurs à un rayon de courbure minimum admissible de la fibre optique.

14 - Système conforme à l'une quelconque des revendications 10 à 13, caractérisé en ce que la seconde couronne (11) est immobile grâce à des aimants (103, 114) logés respectivement dans la première couronne (10) et/ou dans le fond de réservoir (13), et dans la seconde couronne (11).

15 - Système conforme à l'une quelconque des revendications 10 à 14, caractérisé en ce qu'il comprend des moyens (5) pour suspendre la seconde couronne (11) au-dessus du fond de récipient (13).

16 - Système conforme aux revendications 2 et 15, caractérisé en ce que les moyens pour suspendre (5) comprennent un arbre (51) perpendiculaire au fond de réservoir (13), des moyens (530, 54) fixés à l'arbre, montés à rotation libre concentriquement à l'arbre et traversés à glissement radial par le tube (34), et des moyens (56, 57, 58) fixés pour partie à l'arbre (51) et pour partie à la seconde couronne (11) pour découpler en rotation l'arbre et la seconde couronne.

17 - Système conforme à l'une quelconque des revendications 10 à 13, caractérisé en ce que la seconde couronne (11) est immobile et suspendue au-dessus du fond de réservoir (13) grâce à des moyens de lévitation magnétique.

18 - Système conforme à l'une quelconque des revendications 10 à 17, caractérisé en ce qu'il comprend des moyens (57) pour translater axialement la seconde couronne (11) au-dessus du fond de réservoir (13).

**Patentansprüche**

1. Vorrichtung zum Speichern eines fadenförmigen Elementes (F),
   – wobei das fadenförmige Element mit einer ersten Ablaufgeschwindigkeit ($V_e$) in die Vorrichtung eintritt und mit einer zweiten Ablaufgeschwindigkeit ($V_s$) aus der Vorrichtung austritt,
   – wobei die Vorrichtung einen Behälter (1), Mittel (2, 3) oberhalb des Behälters zum Aufwickeln des fadenförmigen Elementes (F), das mit der ersten Geschwindigkeit in auf der Oberseite des Bodens (13) des Behälters übereinanderliegende Windungslagen abläuft, und Mittel (10, 11) zum Führen des abgewickelten fadenförmigen Elementes (F) mit der zweiten Geschwindigkeit ($V_s$) ausgehend vom Boden (13) des Behälters (1) durch den Boden und zur Unterseite des Bodens, dadurch gekennzeichnet, daß die Mittel zum Aufwickeln (2, 3) das fadenförmige Element (F) folgend einer Bahn vom Epizykloid- oder Hypozykloid Typ (T) aufwickeln.

2. Vorrichtung nach Anspruch 1, dadurch gekennzeichnet, daß die Mittel zum Aufwickeln vorzugsweise elektromechanische Mittel (3) aufweisen, um ein erstes Ende (342) eines Rohrs (34) oberhalb des Behälters (1) folgend der Bahn (T) zu verstellen, wobei das fadenförmige Element (F) im Rohr (34) gleitet.

3. Vorrichtung nach Anspruch 2, dadurch gekennzeichnet, daß das fadenförmige Element (F) in ein zweites Ende (341) des Rohrs (34) eindringt, das in einem durch die Verstellmittel (3) angetriebenen Kippglied (332) untergebracht ist, wobei das Kippglied auf einer Achse (YY') senkrecht zum Boden (13) des Behälters (1) zentriert ist.

4. Vorrichtung nach einem beliebigen der Ansprüche 1 bis 3, dadurch gekennzeichnet, daß die Mittel zum Aufwickeln (2, 3) Mittel (20 bis 26) zum Ziehen des fadenförmigen Elementes (F) mit der ersten Geschwindigkeit ($V_e$) und Mittel (27) zum Führen des fadenförmigen Elementes (F) zu einer Senkrechten zum Zentrum (131) des Bodens (13) des Behälters (1) vor dem Verstellen des fadenförmigen Elementes (F) gemäß der Bahn (T) aufweisen.

5. Vorrichtung nach Anspruch 4, dadurch gekennzeichnet, daß die Mittel zum Ziehen (20 bis 26) eine Riemenscheibe (21) und einen gespannten Treibriemen (22) aufweisen, um das fadenförmige Element (F) auf einem peripheren Abschnitt der Riemenscheibe, vorzugsweise mit Nut, sandwichartig zu halten.

6. Vorrichtung nach Anspruch 2 oder 3 und Anspruch 4 oder 5, dadurch gekennzeichnet, daß sie Mittel (28) zum Steuern der Mittel zum Verstellen (3) in Abhängigkeit von der ersten Geschwindigkeit (Ve) aufweist, bestimmt durch die Mittel zum Ziehen (20 bis 26), damit das fadenförmige Element (F) im Behälter (1) folgend der Bahn (T) abgelegt wird.

7. Vorrichtung nach einem beliebigen der Ansprüche 1 bis 6, dadurch gekennzeichnet, daß die Unterseite des Bodens (13) des Behälters (1) Riefelungen, vorzugsweise mit einer Tiefe in der Größe des Zehntels des Durchmessers des fadenförmigen Elementes (F) aufweist.

8. Vorrichtung nach einem beliebigen der Ansprüche 1 bis 3, dadurch gekennzeichnet, daß der Behälter (1) ein Wirbelbett oder eine Flüssigkeit enthält.

9. Vorrichtung nach einem beliebigen der Ansprüche 1 bis 8, dadurch gekennzeichnet, daß die Mittel zum Führen (10, 11) im Zentrum (YY') des Behälters (1) angeordnet sind und zu den Windungen der Aufwickelbahn (T) des fadenförmigen Elementes (F) innen sind.

10. Vorrichtung nach einem beliebigen der Ansprüche 1 bis 9, dadurch gekennzeichnet, daß die Mittel zum Führen (10, 11) ein auf dem Behälterboden (13) befestigtes erstes Einfassungsglied (10) und ein zweites Einfassungsglied (11) oberhalb des Behälterbodens (13) und das erste Einfassungsglied (10) konzentrisch umgebend aufweisen, wobei das fadenförmige Element (F) beim Vorbeilaufen durch einen ersten Zwischenraum (15) zwischen dem zweiten Einfassungsglied (11) und dem Boden (13), durch einen zweiten Zwischenraum (14) zwischen den Einfassungsgliedern (10, 11) und durch einen das erste Einfassungsglied (10) und den Boden (13) durchquerenden Kanal (12, 131) abgewickelt wird, wobei der Kanal vorzugsweise senkrecht zum Boden und axial zum ersten Einfassungsglied ist.

11. Vorrichtung nach Anspruch 10, dadurch gekennzeichnet, daß die ersten und zweiten Zwischenräume (15, 14) eine Länge (d) besitzen, die um einige Millimeter den Durchmesser des fadenförmigen Elementes (F) übersteigt.

12. Vorrichtung nach Anspruch 10 oder 11, dadurch gekennzeichnet, daß das erste Einfassungsglied (10) einen axialen konvexen halbkreisförmigen Abschnitt (101) entgegengesetzt zum Boden (13) besitzt und das zweite Einfassungsglied einen Rand (111) besitzt, der einen axialen konvexen Viertelkreis-Abschnitt gegenüber dem Boden (13) und dem ersten Einfassungsglied (10) besitzt.

13. Vorrichtung nach Anspruch 12, dadurch gekennzeichnet, daß das fadenförmige Element (F) eine optische Faser ist und die konvexen Abschnitte (101, 111) Radien (r) größer als ein minimaler zulässiger Krümmungsradius der optischen Faser besitzen.

14. Vorrichtung nach einem beliebigen der Ansprüche 10 bis 13, dadurch gekennzeichnet, daß das zweite Einfassungsglied (11) infolge von jeweils im ersten Einfassungsglied (10) und/oder im Behälterboden (13) und im zweiten Einfassungsglied (11) untergebrachten Magneten (103, 114) unbeweglich ist.

15. Vorrichtung nach einem beliebigen der Ansprüche 10 bis 14, dadurch gekennzeichnet, daß sie Mittel (5) zum Aufhängen des zweiten Einfassungsgliedes (11) oberhalb des Behälterbodens (13) aufweist.

16. Vorrichtung nach den Ansprüchen 2 und 15, dadurch gekennzeichnet, daß sie Mittel zum Aufhängen (5) eine Welle (51) senkrecht zum Behälterboden (13), an der Welle befestigte Mittel (530, 54), angebracht zur freien Rotation konzentrisch zur Welle und vom Rohr (34) mit radialem Gleiten durchquert, und Mittel (56, 57, 58) teilweise an der Welle (51) und teilweise am zweiten Einfassungsglied (11) befestigt aufweisen, um die Welle und das zweite Einfassungsglied rotationsmäßig zu entkoppeln.

17. Vorrichtung nach einem beliebigen der Ansprüche 10 bis 13, dadurch gekennzeichnet, daß das zweite Einfassungsglied (11) unbeweglich und oberhalb des Behälterbodens (13) infolge von Magnetschwebemitteln aufgehängt ist.

18. Vorrichtung nach einem beliebigen der Ansprüche 10 bis 17, dadurch gekennzeichnet, daß sie Mittel (57) zur axialen Verschiebung des zweiten Einfassungsgliedes (11) oberhalb des Behälterbodens (13) aufweist.

## Claims

1. System for accumulating a filiform element (F), said filiform element entering the system at a first travel speed (Ve) and leaving the system at a second travel speed (Vs), said system comprising a container (1), means (2, 3) located above the container for winding the filiform element (F) travelling at said first speed into layers of coils stacked on an inner surface of bottom (13) of the container, and means (10, 11) for guiding the filiform element (F) unwound at said second speed (Vs) from the bottom (13) of the container (1) through the bottom and underneath the bottom, characterized in that the winding means (2, 3) wind the filiform element (F) along a path of epicycloid or hypocycloid type (T).

2. System according to claim 1, characterized in that the winding means comprise means (3), preferably electromechanical means, for moving along said path (T) a first end (342) of a tube (34) above the container (1), the filiform element (F) sliding inside the tube (34).

3. System according to claim 2, characterized in that the filiform element (F) enters a second end (341) of the tube (34) housed in a ball-joint (332) driven by the moving means (3), the ball-joint being centered on an axis (YY') perpendicular to the bottom (13) of the container (1).

4. System according to claims 1 to 3, characterized in that the winding means (2, 3) comprise means (20 to 26) for drawing the filiform element (F) at the first speed (Ve), and means (27) for guiding the filiform element (F) towards a perpendicular at the centre (131) of the bottom (13) of the container (1) before moving the filiform element (F) along said path (T).

5. System according to claim 4, characterized in that the drawing means (20 to 26) comprise a pulley (21) and a tensioned belt (22) to sandwich the filiform element (F) on a peripheral portion of the pulley, preferably grooved.

6. System according to claim 2 or 3 and to claims 4 to 5, characterized in that it comprises means (28) for slaving the moving means (3) depending to the first speed (V_e) determined by the drawing means (20 to 26) thereby laying the filiform element (F) in the container (1) along said path (T).

7. System according to any one of claims 1 to 6, characterized in that the inner surface of the bottom (13) of the container (1) comprises grooves, preferably having a depth of the order of the tenth of the diameter of the filiform element (F).

8. System according to any one of claims 1 to 7, characterized in that the container (1) contains a fluidized bed or a liquid.

9. System according to any one of claims 1 to 8, characterized in that the guiding means (10, 11) are located at the centre (YY') of the container (1) and are inside the coils of said winding path (T) of the filiform element (F).

10. System according to any one of claims 1 to 9, characterized in that the guiding means (10, 11) comprise a first ring (10) fixed to the container bottom (13), and a second ring (11) located above the container bottom (13) and concentrically surrounding the first ring (10), the filiform element (F) being unwound by passing through a first gap (15) between the second ring (11) and the bottom (13), through a second gap (14) between the ring (10, 11) and through a channel (12, 131) passing through the first ring (10) and the bottom (13), the channel being preferably perpendicular to the bottom and axial to the first ring.

11. System according to claim 10, characterized in that the first and second gaps (15, 14) have a width (d) that is a few millimetres greater than the diameter of the filiform element (F).

12. System according to claim 10 or 11, characterized in that the first ring (10) has a convex semicircular axial cross-section (101) opposite the bottom (13), and the second ring has an edge (111) with a quarter-circle convex axial cross-section facing the bottom (13) and the first ring (10).

13. System according to claim 12, characterized in that the filiform element (F) is an optical fiber, and the convex cross-section (101, 111) have radii (r) greater than a minimum allowable bend radius of the optical fiber.

14. System according to any one of claims 10 to 13, characterized in that the second ring (11) is immobilized by magnets (103, 104) housed respectively in the first ring (10) and/or in the container bottom (13), and in the second ring (11).

15. System according to any one of claims 10 to 14, characterized in that it comprises means (5) for suspending the second ring (11) above the container bottom (13).

16. System according to claims 2 and 15, characterized in that the suspending means (5) comprise a shaft (51) perpendicular to the container bottom (13), means (530, 54) fixed to the shaft, freely rotating concentric to the shaft and through which the tube (34) slides radially, and means (56, 57, 58) secured in part to the shaft (51) and in part to the second ring (11) for uncoupling in rotation the shaft and the second ring.

17. System according to any one of claims 10 to 13, characterized in that the second ring (11) is stationnary and suspended above the container bottom (13) by magnetic lifting means.

18. System according to any one of claims 10 to 17, characterized in that it comprises means (57) for axial translating the second ring (11) above the container bottom (13).

# FIG.1

FIG.2

# FIG.3

# FIG.4